# EUROPEAN PATENT APPLICATION

(11) **EP 4 296 245 A1**
(43) Date of publication of application: **27.12.2023**
(21) Application number: 23158685.0
(22) Date of filing: 27.02.2023
(51) Int. Cl.: C04B 28/26, C04B 28/18, C04B 111/28

(54) **STRAW AEROGEL FLAME-RETARDANT INSULATION BOARD AND PREPARATION METHOD THEREOF**

(30) Priority: 16.06.2022 CN 202210685987
(71) Applicant: Treezo New Material Technology Group Co., Ltd., Hangzhou City Zhejiang 311112 (CN)
(72) Inventor: WANG, Shuping, Hangzhou City (CN); LU, Shanbin, Hangzhou City (CN); WANG, Hongsong, Hangzhou City (CN); ZHANG, Jingjing, Hangzhou City (CN); WANG, Yang, Hangzhou City (CN); WEI, Renzhong, Hangzhou City (CN); BI, Haiming, Hangzhou City (CN); LU, Tonghua, Hangzhou City (CN)
(74) Representative: Sach, Greg Robert

(57) **Abstract**

The present application discloses a straw aerogel flame-retardant insulation board and preparation method thereof. The straw aerogel flame-retardant insulation board is prepared by uniformly mixing of a straw raw material, a crosslinking agent, a water-soluble silicon source, a calcium source and water, paving, prepressing-molding, and curing at high temperature and high pressure; straw fibers are formed by compounding long straw fibers with the length of 1-2 cm and short straw fibers with the length smaller than 1 cm. The straw aerogel flame-retardant insulation board of the present application retains the natural texture of the straw, which has a good decorative effect, and also has the characteristics of low density, high strength, smooth surface, flame retardancy, no formaldehyde, heat and sound insulation, mildew and moth prevention and the like.

## Description

### TECHNICAL FIELD

The present application relates to a straw aerogel flame-retardant insulation board and preparation method thereof and belongs to the technical field of new composite fiberboard.

### BACKGROUND

China has the first wood-based board production and consumption in the world and is a large wood-based board production country. However, forestry resources are relatively short. Per capita forest area is only 1/4 of the world's per capita level and wood import dependence is close to 50%. Forest recoverable resources are scarce.

China is also a big agricultural country with abundant crop straw resources. The crop straw has huge output, many types and wide distribution. The use of crop straw in the field of wood-based board production can not only solve the problem of wood shortage, but also promote the application value of straw resources.

The Chinese patent with publication number CN104724976A discloses a straw fireproof insulation board and production method thereof, and the straw is used as main filler. It makes full use of the characteristics of strong filling capacity, high fiber toughness and fire insulation ability of straw. Under the action of phenol-formaldehyde resin particles, latex powder and water-repellent agent, a thermal insulation board with strong bending resistance, compression resistance and flexural resistance, high fire resistance, convenient construction and low cost is produced, and at the same time, it also solves the problem of post-treatment and reuse of agricultural waste. However, the use of phenol-formaldehyde resin as the adhesive in this method will lead to the problem of formaldehyde release during the production and use of the board, and it does not have the characteristics of aldehyde-free.

The Chinese patent with publication number CN103626433A discloses a straw insulation board and preparation method thereof. Such invention comprises two parts, i.e., a core layer and a coating layer. The core layer is mainly made by epoxy glue, jade powder, pearlescent sand and straw through pressing and molding, and the surface coating layer is mainly evenly coated on the surface of the straw board by using inorganic cementitious materials with bonding effect. Thus, a new type of straw insulation board with straw as board is obtained. The new straw insulation board has excellent properties such as rapid molding, heat insulation, flame retardant, mildew prevention and high strength. However, the material and thermal expansion coefficient of the surface and core layers of the insulation board prepared by this method are different. Problems such as cracking may occur during use, and the flame retardant performance of the core layer is also weakened.

The Chinese patent with publication number CN113084960A introduces a corn straw board and preparation method thereof. The method uses straw-softening enzyme to etch the surface of corn straw long fiber to expose the crude fiber of the straw. By using straw with rich pore structure and using nanocellulose solution as a reinforcing agent, the strength of the board is improved. However, the efficiency of this method in treating straw is low, and the conditions of the enzymatic reaction are harsh, which is difficult to apply on a large scale.

The Chinese patent with publication number CN111300565A introduces an anticorrosive corn straw recombinant material and manufacturing method thereof, which uses resorcinol-modified phenol-formaldehyde resin as an adhesive to dredge and preserve the outer skin of corn straw. However, the composite board prepared by this method does not have the characteristics of flame retardant and aldehyde-free.

The Chinese patent with publication number CN112851290A introduces a wood and straw fiberboard with inorganic adhesive and preparation method thereof. The straw fiberboard prepared by the method has a low fiber content, poor woodiness, and high density, thus does not have the characteristics of low density.

### SUMMARY

In response to the above problems, the present application provides a straw aerogel flame-retardant insulation board and preparation method thereof. The straw aerogel flame-retardant insulation board has the characteristics of flame retardancy, low dnesity, no formaldehyde, heat and sound insulation, mildew and moth prevention and the like, which solve the biggest problem of straw flammability and thus broaden the application field of straw composite board.

The solution of the present application to the above problems is as follows:

The present application provides a straw aerogel flame-retardant insulation board, which is prepared by uniformly mixing of a straw raw material, a crosslinking agent, an inorganic material and water, paving, prepressing-molding, and curing at high temperature and high pressure; wherein the inorganic material comprises a water-soluble silicon source and a calcium source;
the weight fraction of each of the above components is as follows:

| | |
|---|---|
| straw raw material | 100 parts by weight, |
| crosslinking agent | 0.5-5 parts by weight, |
| water-soluble silicon source | 20-40 parts by weight, |
| calcium source | 10-30 parts by weight; |

the mass ratio of water to the inorganic material is 0.8-1;
the process parameters of the curing at high temperature and high pressure are: a temperature of 160-220°C, a unit pressure of 3-10 MPa, and a cure time of 10-30 min;
the straw raw material is formed by compounding long straw fibers and short straw fibers; wherein the mass of long straw fibers accounts for 10%-30% and the mass of short straw fibers accounts for 70%-90%; the long straw fibers have a length of 1-2 cm and the short straw fibers have a length smaller than 1 cm;
the straw raw material has a moisture content of less than 10wt%.

The crosslinking agent is polyvinyl alcohol; the addition of crosslinking agent can improve the binding performance between inorganic adhesive and straw, and improve interface compatibility.

The water-soluble silicon source is instant powdered sodium silicate with modulus 2.1-3.4; in actual use, the solid content after being formulated into an aqueous solution is 30%-40%.

The calcium source is semi-aquatic gypsum; the calcium source is a curing agent, and the addition of the calcium source can react with the water-soluble silicon source to generate calcium silicate crystals, thereby enhancing the mechanical properties of the board.

The present application adopts a double adhesive system composed of silicon aerogel and cellulose aerogel. The water-soluble silicon source in the present application can be uniformly mixed with straw fiber raw materials, and a silica aerogel network is generated in the high temperature and high pressure process, thereby bonding the straw fiber raw materials together; at the same time, the lignin and cellulose in the straw fiber are also wound and reacted at high temperature to form a cellulose aerogel network, thereby further improving the internal bond strength of the board. The crosslinking agent polyvinyl alcohol added to the present application can improve the interface compatibility between the silicon source and the straw; the addition of the calcium source can react with silicon source and steam under the high temperature and high pressure condition to generate calcium silicate crystals, which play a role in strengthening the backbone inside the board and improve the mechanical properties of the board; at the same time, water evaporates under the high temperature condition, resulting in formation of pores in the board and a complex pore tunnel structure, which is conducive to reducing the density of the board and improving the thermal insulation performance of the board. The silicon-calcium system further reacts to improve the mechanical strength of the board.

The mixture of straw's long fibers and short fibers is selected as the straw fiber raw material used in the present application. The purpose is to make the straw fibers and the inorganic adhesive mix evenly, compact the board structure, and improve the mechanical properties of the board. The long straw fibers in the board are overlapped with each other to form a network structure that is crisscrossed, which can inhibit the generation and spread of microcracks in the inorganic gel system, improve the elastic modulus of the board, and retain the natural morphology of the straw. The short straw fibers have a larger specific surface area, which is more likely to be infiltrated by a water-soluble silicon source, and after mixing evenly, the short straw fibers are filled inside the board to improve the internal bond strength of the board, so as to effectively improve the mechanical properties of the board.

In order to realize the above technical solution, the preparation steps of the straw aerogel flame-retardant insulation board of the present application are as follows:
(1) dusting, drying and mechanical grinding straw to obtain filaments of different lengths, followed by screening the filaments to obtain desired long straw fibers and short straw fibers which are compounded proportionally to produce the straw raw material;
(2) firstly weighing the water-soluble silicon source, the calcium source, the straw raw material of step (1) polyvinyl alcohol and water in proportion, secondly mixing the water-soluble silicon source with water to prepare an aqueous solution, and finally stirring the straw raw material with polyvinyl alcohol, the water-soluble silicon source solution and the calcium source in sequence, to obtain a mixed material after mixing evenly;
(3) paving, pre-pressing, molding and curing at high temperature and high pressure the mixed material of step (2) to obtain a slab of the straw aerogel flame-retardant insulation board; and
(4) maintaining, trimming and sanding the slab of step (3) to obtain a final board of the straw aerogel flame-retardant insulation board of the present application.

The length of the straw fiber after the mechanical grinding of step (1) is no more than 2 cm.

The operating conditions of the prepressing-molding of step (3) are normal temperature and normal pressure until the formation of the slab.

The beneficial effects of the present application are as follows:
(1) the straw aerogel flame-retardant insulation board of the present application retains the natural texture of the straw, which has a good decorative effect, and also has the technical features of low density, high strength, smooth surface, and flame retardancy, which are conducive to promoting the resource utilization of straw.
(2) the straw aerogel flame-retardant insulation board of the present application is able to reach B 1 flame retardant level, and has the characteristics of low density, no formaldehyde, heat and sound insulation, mildew and moth prevention and the like.
(3) by using the components described in the present application to prepare the board under the high temperature and high pressure condition, the density of the board can be reduced and the thermal insulation performance of the board can be improved;
(4) the present application uses the long fibers and short straw fibers to fill the inside of the board, so that the straw fibers and the inorganic adhesive are mixed evenly, thereby improving the internal bond strength of the board and effectively improving the mechanical properties of the board.

### BRIEF DESCRIPTION OF THE DRAWINGS

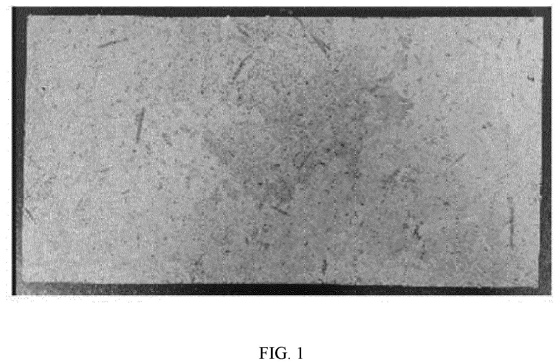

FIG 1 is a schematic diagram of the surface structure of the insulation board prepared in Example 1 of the present application.

### DETAILED DESCRIPTION

The technical solution in the embodiment of the present application is clearly and completely described below. Obviously, the described embodiments are partial, but not all, of embodiments of the present application. Based on the embodiments in the present application, all other embodiments obtained by those of ordinary skill in the art without creative effort, fall within the scope of the protection of the present application.

### Example 1

The preparation method of the straw aerogel flame-retardant insulation board of the present application comprises steps as follows:
(1) dusting, drying and mechanical grinding straw to obtain filaments of different lengths, followed by screening the filaments to obtain long fibers with the length of 1-2 cm and short fibers with the length smaller than 1 cm, the long fibers and short fibers were compounded in a ratio of 2:8, and 1000 g of the straw raw material were weighed;
(2) weighing sodium silicate 370 g, semi-aquatic gypsum 150 g, polyvinyl alcohol 6 g and water 420 g, respectively, stirring the straw raw material with polyvinyl alcohol, the water-soluble silicon source and the calcium source in sequence, to obtain a mixed material after mixing evenly;
(3) paving and molding the mixed material in a 55 cm × 55 cm mold, then placing it on a thermocompressor with thickness set to be 0.9 cm to hot-press for 12 min under 180°C and 3 MPa, to prepare a slab of the straw aerogel flame-retardant insulation board;
(4) maintaining the slab for 3 days under room temperature and then trimming and sanding the slab to obtain a final board.

FIG 1 is a schematic diagram of the surface structure of the insulation board prepared in Example 1. As can be seen, the surface of the board is flat while retains the natural texture of the straw.

### Example 2

The preparation method of the straw aerogel flame-retardant insulation board of the present application comprises steps as follows:
(1) dusting, drying and mechanical grinding straw to obtain filaments of different lengths, followed by screening the filaments to obtain long fibers with the length of 1-2 cm and short fibers with the length smaller than 1 cm, the long fibers and short fibers were compounded in a ratio of 2:8, and 1000 g of the straw raw material were weighed;
(2) weighing sodium silicate 200 g, semi-aquatic gypsum 120 g, polyvinyl alcohol 5 g and water 260 g, respectively, stirring the straw raw material with polyvinyl alcohol, the water-soluble silicon source and the calcium source in sequence, to obtain a mixed material after mixing evenly;
(3) paving and molding the mixed material in a 55 cm × 55 cm mold, then placing it on a thermocompressor with thickness set to be 0.9 cm to hot-press for 30min under 160°C and 7 MPa, to prepare a slab of the straw aerogel flame-retardant insulation board;
(4) maintaining the slab for 3 days under room temperature and then trimming and sanding the slab to obtain a final board.

### Example 3

The preparation method of the straw aerogel flame-retardant insulation board of the present application comprises steps as follows:
(1) dusting, drying and mechanical grinding straw to obtain filaments of different lengths, followed by screening the filaments to obtain long fibers with the length of 1-2 cm and short fibers with the length smaller than 1 cm, the long fibers and short fibers were compounded in a ratio of 2:8, and 1000g of the straw raw material were weighed;
(2) weighing sodium silicate 370 g, semi-aquatic gypsum 150 g, polyvinyl alcohol 6 g and water 420 g, respectively, stirring the straw raw material with polyvinyl alcohol, the water-soluble silicon source and the calcium source in sequence, to obtain a mixed material after mixing evenly;
(3) paving and molding the mixed material in a 55 cm × 55 cm mold, then placing it on a thermocompressor with thickness set to be 0.9 cm to hot-press for 8min under 220°C and 3 MPa, to prepare a slab of the straw aerogel flame-retardant insulation board;
(4) maintaining the slab for 3 days under room temperature and then trimming and sanding the slab to obtain a final board.

### Example 4

The preparation method of the straw aerogel flame-retardant insulation board of the present application comprises steps as follows:
(1) dusting, drying and mechanical grinding straw to obtain filaments of different lengths, followed by screening the filaments to obtain long fibers with the length of 1-2 cm and short fibers with the length smaller than 1 cm, the long fibers and short fibers were compounded in a ratio of 3:7, and 1000 g of the straw raw material were weighed;
(2) weighing sodium silicate 370 g, semi-aquatic gypsum 150 g, polyvinyl alcohol 6 g and water 420 g, respectively, stirring the straw raw material with polyvinyl alcohol, the water-soluble silicon source and the calcium source in sequence, to obtain a mixed material after mixing evenly;
(3) paving and molding the mixed material in a 55 cm × 55 cm mold, then placing it on a thermocompressor with thickness set to be 0.9cm to hot-press for 12 min under 180°C and 3 MPa, to prepare a slab of the straw aerogel flame-retardant insulation board;
(4) maintaining the slab for 3 days under room temperature and then trimming and sanding the slab to obtain a final board.

### Example 5

The preparation method of the straw aerogel flame-retardant insulation board of the present application comprises steps as follows:
(1) dusting, drying and mechanical grinding straw to obtain filaments of different lengths, followed by screening the filaments to obtain long fibers with the length of 1-2 cm and short fibers with the length smaller than 1 cm, the long fibers and short fibers were compounded in a ratio of 3:7, and 1000g of the straw raw material were weighed;
(2) weighing sodium silicate 400 g, semi-aquatic gypsum 150 g, polyvinyl alcohol 6 g and water 440 g, respectively, stirring the straw raw material with polyvinyl alcohol, the water-soluble silicon source and the calcium source in sequence, to obtain a mixed material after mixing evenly;
(3) paving and molding the mixed material in a 55 cm × 55 cm mold, then placing it on a thermocompressor with thickness set to be 0.9 cm to hot-press for 12 min under 180°C and 3 MPa, to prepare a slab of the straw aerogel flame-retardant insulation board;
(4) maintaining the slab for 3 days under room temperature and then trimming and sanding the slab to obtain a final board.

### Example 6

The preparation method of the straw aerogel flame-retardant insulation board of the present application comprises steps as follows:
(1) dusting, drying and mechanical grinding straw to obtain filaments of different lengths, followed by screening the filaments to obtain long fibers with the length of 1-2 cm and short fibers with the length smaller than 1 cm, the long fibers and short fibers were compounded in a ratio of 3:7, and 1000 g of the straw raw material were weighed;
(2) weighing sodium silicate 370 g, semi-aquatic gypsum 150 g, polyvinyl alcohol 12 g and water 420 g, respectively, stirring the straw raw material with polyvinyl alcohol, the water-soluble silicon source and the calcium source in sequence, to obtain a mixed material after mixing evenly;
(3) paving and molding the mixed material in a 55 cm × 55 cm mold, then placing it on a thermocompressor with thickness set to be 0.9 cm to hot-press for 12 min under 180°C and 3 MPa, to prepare a slab of the straw aerogel flame-retardant insulation board;
(4) maintaining the slab for 3 days under room temperature and then trimming and sanding the slab to obtain a final board.

### Example 7

The preparation method of the straw aerogel flame-retardant insulation board of the present application comprises steps as follows:
(1) dusting, drying and mechanical grinding straw to obtain filaments of different lengths, followed by screening the filaments to obtain long fibers with the length of 1-2 cm and short fibers with the length smaller than 1 cm, the long fibers and short fibers were compounded in a ratio of 1:9, and 1000 g of the straw raw material were weighed;
(2) weighing sodium silicate 370 g, semi-aquatic gypsum 120 g, polyvinyl alcohol 6 g and water 420 g, respectively, stirring the straw raw material with polyvinyl alcohol, the water-soluble silicon source and the calcium source in sequence, to obtain a mixed material after mixing evenly;
(3) paving and molding the mixed material in a 55cm × 55cm mold, then placing it on a thermocompressor with thickness set to be 0.9 cm to hot-press for 12 min under 180°C and 3 MPa, to prepare a slab of the straw aerogel flame-retardant insulation board;
(4) maintaining the slab for 3 days under room temperature and then trimming and sanding the slab to obtain a final board.

### Example 8

The preparation method of the straw aerogel flame-retardant insulation board of the present application comprises steps as follows:
(1) dusting, drying and mechanical grinding straw to obtain filaments of different lengths, followed by screening the filaments to obtain long fibers with the length of 1-2 cm and short fibers with the length smaller than 1 cm, the long fibers and short fibers were compounded in a ratio of 3:7, and 1000 g of the straw raw material were weighed;
(2) weighing sodium silicate 370 g, semi-aquatic gypsum 150 g, polyvinyl alcohol 6 g and water 420 g, respectively, stirring the straw raw material with polyvinyl alcohol, the water-soluble silicon source and the calcium source in sequence, to obtain a mixed material after mixing evenly;
(3) paving and molding the mixed material in a 55 cm × 55 cm mold, then placing it on a thermocompressor with thickness set to be 0.9 cm to hot-press for 10min under 200°C and 3 MPa, to prepare a slab of the straw aerogel flame-retardant insulation board;
(4) maintaining the slab for 3 days under room temperature and then trimming and sanding the slab to obtain a final board.

### Comparative Example 1 (without calcium source)

The preparation method of the straw aerogel flame-retardant insulation board comprises steps as follows:
(1) dusting, drying and mechanical grinding straw to obtain filaments of different lengths, followed by screening the filaments to obtain long fibers with the length of 1-2 cm and short fibers with the length smaller than 1 cm, the long fibers and short fibers were compounded in a ratio of 2:8, and 1000 g of the straw raw material were weighed;
(2) weighing sodium silicate 370 g, polyvinyl alcohol 6 g and water 420 g, respectively, stirring the straw fibers with polyvinyl alcohol, the water-soluble silicon source and the calcium source in sequence, to obtain a mixed material after mixing evenly;
(3) paving and molding the mixed material in a 55 cm × 55 cm mold, then placing it on a thermocompressor with thickness set to be 0.9 cm to hot-press for 8 min under 180°C and 3 MPa, to prepare a slab of the straw aerogel flame-retardant insulation board;
(4) maintaining the slab for 3 days under room temperature and then trimming and sanding the slab to obtain a final board.

### Comparative Example 2 (all straw being short fibers)

The preparation method of the straw aerogel flame-retardant insulation board comprises steps as follows:
(1) dusting, drying and mechanical grinding straw to obtain filaments of different lengths, followed by screening the filaments to obtain short fibers with the length smaller than 1 cm, and 1000 g of the short straw fibers were weighed;
(2) weighing sodium silicate 370 g, polyvinyl alcohol 6 g and water 420 g, respectively, stirring the straw raw material with polyvinyl alcohol, the water-soluble silicon source and the calcium source in sequence, to obtain a mixed material after mixing evenly;
(3) paving and molding the mixed material in a 55 cm × 55 cm mold, then placing it on a thermocompressor with thickness set to be 0.9 cm to hot-press for 8min under 180°C and 3 MPa, to prepare a slab of the straw aerogel flame-retardant insulation board;
(4) maintaining the slab for 3 days under room temperature and then trimming and sanding the slab to obtain a final board.

### Comparative Example 3 (reduced temperature)

The preparation method of the straw aerogel flame-retardant insulation board comprises steps as follows:
(1) dusting, drying and mechanical grinding straw to obtain filaments of different lengths, followed by screening the filaments to obtain long fibers with the length of 1-2 cm and short fibers with the length smaller than 1 cm, the long fibers and short fibers were compounded in a ratio of 2:8, and 1000 g of the straw raw material were weighed
(2) weighing sodium silicate 370 g, polyvinyl alcohol 6 g and water 420 g, respectively, stirring the straw fibers with polyvinyl alcohol, the water-soluble silicon source and the calcium source in sequence, to obtain a mixed material after mixing evenly;
(3) paving and molding the mixed material in a 55cm × 55cm mold, then placing it on a thermocompressor with thickness set to be 0.9cm to hot-press for 12 min under 120°C and 3 MPa, to prepare a slab of the straw aerogel flame-retardant insulation board;
(4) maintaining the slab for 3 days under room temperature and then trimming and sanding the slab to obtain a final board.

### Performance test

The performance test was performed on the boards obtained from each Example and Comparative Example of the present application, and the results are shown in Table 1.

**Table 1. Performance test results of straw aerogel flame-retardant insulation boards**

| | **Compression strength (MPa)** | **Flexural strength (MPa)** | **Thermal conductivity (W/(m·K))** | **Apparent density (g/cm³)** | **Thickness swelling (%)** | **Oxygen index (%)** |
|---|---|---|---|---|---|---|
| **Example 1** | **1.3** | **0.8** | **0.030** | **0.27** | **3.6** | **54** |
| **Example 2** | **0.98** | **0.52** | **0.030** | **0.28** | **4.3** | **51** |
| **Example 3** | **1.4** | **0.86** | **0.028** | **0.26** | **3.4** | **55** |
| **Example 4** | **1.4** | **0.82** | **0.029** | **0.25** | **3.5** | **52** |
| **Example 5** | **1.5** | **0.85** | **0.028** | **0.26** | **3.2** | **54** |

| | | | | | | |
|---|---|---|---|---|---|---|
| **Example 6** | **1.3** | **0.87** | **0.030** | **0.27** | **3.7** | **53** |
| **Example 7** | **1.4** | **0.89** | **0.027** | **0.29** | **3.8** | **51** |
| **Example 8** | **1.3** | **0.83** | **0.028** | **0.2.7** | **3.1** | **53** |
| Comparative Example 1 | **0.37** | **0.16** | **0.034** | **0.22** | **6.3** | **41** |
| Comparative Example 2 | **0.4** | **0.13** | **0.061** | **0.36** | **8.6** | **53** |
| Comparative Example 3 | **0.95** | **0.55** | **0.047** | **0.41** | **5.8** | **54** |

From the data of flexural strength and compression strength from each Example and Comparative Example in Table 1, it can be found that in each Example of the present application, the long fiber retains the macroscopic mechanical properties of the straw, and appropriate increase in the content of the long fiber is conducive to the improvement of the mechanical properties of the board.

It can be seen from Table 1 that appropriate increase in temperature is conducive to the improvement of the mechanical properties of the board. At the same time, the dehydration and condensation of wood in organic matter at high temperature improves the water resistance of the board, which is manifested as a decrease in the thickness swelling of the board.

As can be seen from the data in Table 1, Examples 4 and 5, appropriate increase in silicon-calcium ratio (increasing sodium silicate content, reducing semi-aquatic gypsum content) is conducive to the transition of the strength phase crystal of inorganic material from hydrated C-S-H crystal form to tobermorite crystal having higher crystallinity, thereby promoting the improvement of the mechanical properties of the board.

As can be seen from Examples 6 and 8, increasing the temperature can promote the degree of glass transformation of hemicellulose and lignin in straw and promote the formation of cellulose aerogel, which is conducive to the dehydration condensation reaction of hydroxyl groups and improve the hydrophobicity of the board.

As can be seen from Comparative Example 1 and Example 1, as a curing agent for silicon sources, calcium source can form hydrated calcium silicate crystals under the high temperature and high pressure condition, thereby improving the mechanical properties of the board, and the mechanical properties of the board are significantly reduced without the calcium source.

As can be seen from Comparative Example 1 and Example 2, the lap of long fibers and short fibers can effectively improve the mechanical properties of the board, reduce the thickness swelling of the board, and reduce the problem of slag loss of the board.

As can be seen from Comparative Example 3 and Example 1, when the temperature is low (120°C), the degree of glass transformation of lignin and hemicellulose inside the straw is not enough, and the intensity of the cellulose aerogel formed is weak, which affects the mechanical properties and thermal insulation properties of the board. At the same time, silicon source and calcium source generate calcium-rich C-S-H gel at low temperature (120°C), and generate tobermorite crystals having low crystallinity at 140°C, which are gradually transformed into tobemolite crystals with good crystallinity at 180-200°C.

## Claims

1. A straw aerogel flame-retardant insulation board, **characterized in that** the insulation board is prepared by uniformly mixing of a straw raw material, a crosslinking agent, an inorganic material and water, paving, prepressing-molding, and curing at high temperature and high pressure; wherein the inorganic material comprises a water-soluble silicon source and a calcium source;
the weight part of each of the above components is as follows:
straw raw material 100 parts by weight,
crosslinking agent 0.5-5 parts by weight,
water-soluble silicon source 20-40 parts by weight,
calcium source 10-30 parts by weight;
the mass ratio of water to the inorganic material is 0.8-1;
the process parameters of the curing at high temperature and high pressure are: a temperature of 160-220° C, a unit pressure of 3-10 MPa, and a cure time of 10-30 min;
the straw raw material is formed by compounding long straw fibers and short straw fibers; and
the long straw fibers have a length of 1-2 cm and the short straw fibers have a length smaller than 1 cm.

2. The straw aerogel flame-retardant insulation board of claim 1, **characterized in that** the straw raw material comprises by mass 10%-30% of long straw fibers and 70%-90% of short straw fibers.

3. The straw aerogel flame-retardant insulation board of claim 1 or 2, **characterized in that** the straw raw material has a moisture content of less than 10wt%.

4. The straw aerogel flame-retardant insulation board of claim 1, **characterized in that** the crosslinking agent is polyvinyl alcohol.

5. The straw aerogel flame-retardant insulation board of claim 1, **characterized in that** the water-soluble silicon source is instant powdered sodium silicate with modulus 2.1-3.4.

6. The straw aerogel flame-retardant insulation board of claim 1, **characterized in that** the calcium source is semi-aquatic gypsum.

7. A preparation method of the straw aerogel flame-retardant insulation board of any one of claims 1-6, **characterized by** comprising the following steps:
(1) dusting, drying and mechanical grinding straw to obtain filaments of different lengths, then screening the filaments to obtain desired long straw fibers and short straw fibers which are compounded proportionally to produce the straw raw material;
(2) firstly weighing the water-soluble silicon source, the calcium source, the straw raw material of step (1), polyvinyl alcohol and water in proportion, secondly mixing the water-soluble silicon source with water to prepare an aqueous solution, and finally stirring the straw raw material with polyvinyl alcohol, the water-soluble silicon source solution and the calcium source in sequence, to obtain a mixed material after mixing evenly;
(3) paving, prepressing-molding and curing at high temperature and high pressure the mixed material of step (2) to obtain a slab of the straw aerogel flame-retardant insulation board; and
(4) maintaining, trimming and sanding the slab of step (3) to obtain a final board of the straw aerogel flame-retardant insulation board.

8. The preparation method of the straw aerogel flame-retardant insulation board of claim 7, **characterized in that** the length of the straw fiber after the mechanical grinding of step (1) is no more than 2 cm.

9. The preparation method of the straw aerogel flame-retardant insulation board of claim 7, **characterized in that** the solid content of the water-soluble silicon source solution of step (2) is 30%-40%.

10. The preparation method of the straw aerogel flame-retardant insulation board of claim 7, **characterized in that** the operating conditions of the prepressing-molding of step (3) are normal temperature and normal pressure until the formation of the slab.
